# EUROPEAN PATENT APPLICATION

(11) **EP 4 425 802 A1**
(43) Date of publication of application: **04.09.2024**
(21) Application number: 22906395.3
(22) Date of filing: 08.12.2022
(51) Int. Cl.: H04B 7/06

(54) **CHANNEL STATE INFORMATION FEEDBACK METHOD AND APPARATUS**

(30) Priority: 13.12.2021 CN 202111521858
(71) Applicant: Huawei Technologies Co., Ltd., Shenzhen, Guangdong 518129 (CN)
(72) Inventor: GAO, Junhui, Shenzhen, Guangdong 518129 (CN); JIN, Huangping, Shenzhen, Guangdong 518129 (CN)
(74) Representative: Goddar, Heinz J.
(86) International application number: PCT/CN2022/137611
(87) International publication number: WO 2023/109647

(57) **Abstract**

Embodiments of this application relate to the field of communication technologies and provide a channel state information feedback method, and an apparatus, to improve interaction efficiency of a communication system and reduce air interface signaling overheads. The method includes the following steps: A network device determines configuration information, where the configuration information indicates resources of N reference signals for channel measurement, and N is a positive integer greater than 1. The network device sends the configuration information and the N reference signals to a terminal device. The network device receives channel state indication information sent by the terminal device, where the indication information is obtained by the terminal device by measuring the N reference signals based on the configuration information.

## Description

This application claims priority to Chinese Patent Application No. 202111521858.9, filed with the China National Intellectual Property Administration on December 13, 2021 and entitled "CHANNEL STATE INFORMATION FEEDBACK METHOD, AND APPARATUS", which is incorporated herein by reference in its entirety.

### TECHNICAL FIELD

This application relates to the field of communication technologies, and in particular, to a channel state information feedback method, and an apparatus.

### BACKGROUND

Emergence of a multiple-input multiple-output (multiple-input multiple-output, MIMO) technology has brought revolutionary changes to wireless communication. The MIMO technology in which a plurality of antennas are deployed on a transmitting end device and a receiving end device can significantly improve performance of a wireless communication system. For example, in a diversity scenario, the MIMO technology can effectively improve transmission reliability; and in a multiplexing scenario, the MIMO technology can greatly increase a transmission throughput.

A precoding technology is usually used in a MIMO system to improve a channel, so as to improve a spatial multiplexing (spatial multiplexing) effect. In the precoding technology, data is processed by using a precoding matrix that matches the channel, so as to implement channel precoding and improve data receiving quality. To implement the precoding technology, a terminal device needs to feed back channel state information (channel state information, CSI) to a network device.

In an existing frequency division duplex (frequency division duplexing, FDD) wireless communication system, the CSI is usually fed back through dynamic channel measurement. After the network device sends a CSI measurement configuration to the terminal device, each time the network device sends a reference signal (reference signal, RS), the terminal device performs channel measurement once and calculates CSI, and then feeds back the CSI to the network device. In other words, the terminal device needs to feed back CSI once each time the terminal device receives and measures an RS.

However, frequent CSI feedback results in low interaction efficiency of the communication system and excessively high air interface signaling overheads. Especially in a scenario in which the terminal device moves quickly, feedback overheads are large, and the CSI that is fed back cannot accurately reflect a real channel state due to a time-varying channel characteristic. Therefore, how to effectively reduce air interface signaling overheads for feedback while ensuring CSI feedback precision is a problem to be urgently resolved currently.

### SUMMARY

This application provides a channel state information feedback method, and an apparatus, to help reduce air interface resource signaling overheads.

The following describes this application from a plurality of aspects. It is easy to understand that implementations of the plurality of aspects may be mutually referenced.

According to a first aspect, this application provides a channel state information feedback method, including: A network device determines configuration information, where the configuration information indicates resources of N reference signals for channel measurement, and N is a positive integer greater than 1; the network device sends the configuration information and the N reference signals to a terminal device; and the network device receives channel state indication information from the terminal device, where the indication information is obtained by the terminal device by measuring the N reference signals based on the configuration information.

It can be learned that according to the method provided in embodiments of this application, the network device configures the terminal device to estimate channel state information based on the N reference signals and send the channel state information to the network device, and the terminal device does not need to report one piece of channel state information to the network device each time detecting one reference signal. This improves interaction efficiency of a communication system and reduces air interface resource overheads.

In a possible implementation, the configuration information further includes information about periodicities of the resources of the N reference signals for channel measurement, the network device periodically sends the N reference signals to the terminal device, and the network device periodically receives the channel state indication information from the terminal device.

Therefore, the network device can configure the terminal device to periodically feed back a channel state estimated based on the N reference signals.

In a possible implementation, the channel state indication information includes a precoding matrix indicator PMI that indicates channel information states, at one or more moments, predicted by the terminal device, the network device determines first precoding based on the PMI, and the network device precodes downlink data based on the first precoding.

Therefore, the network device can perform downlink data precoding and sending based on the predicted channel state information reported by the terminal device.

In a possible implementation, the channel state indication information includes a PMI that indicates channel information states, at N moments, estimated by the terminal device, the network device performs channel prediction based on the PMI, the network device determines second precoding based on a predicted channel, and the network device precodes downlink data based on the second precoding.

Therefore, the network device can perform downlink data precoding and sending based on the estimated channel state information reported by the terminal device.

In a possible implementation, the configuration information further indicates one or N resources for interference measurement, and the channel state indication information is obtained by the terminal device by measuring the N reference signals and performing signal detection on the one or N resources for interference measurement based on the configuration information.

Therefore, the network device can configure the terminal device to measure and feed back the channel state information based on the N reference signals for channel measurement and the one or N interference measurement resources for interference measurement. This improves interaction efficiency of the communication system and reduces the air interface resource overheads.

In a possible implementation, the configuration information further includes information about periodicities of the N resources for interference measurement, and the periodicities of the N resources used for interference measurement are the same as the periodicities of the resources of the N reference signals for channel measurement.

In a possible implementation, the channel state indication information does not include a channel state information reference signal resource indicator CRI.

This helps reduce a calculation amount and signaling overheads.

In a possible implementation, the configuration information further includes codebook type indication information, and the codebook type indication information indicates a codebook type corresponding to the channel state indication information.

In a possible implementation, resources of any two adjacent reference signals of the N reference signals for channel measurement have a same resource offset.

In a possible implementation, any two adjacent resources of the N resources for interference measurement have a same resource offset.

In a possible implementation, the N reference signals for channel measurement have a same quasi co-location QCL type.

In a possible implementation, the reference signal for channel measurement is a non-zero power channel state information reference signal nzp-CSI-RS.

In a possible implementation, the network device sends the configuration information to the terminal device by using radio resource control RRC signaling.

In a possible implementation, the configuration information includes configured time restriction for channel measurement timeRestrictionForChannelMeasurements.

According to a second aspect, this application provides a channel state information feedback method, including: A terminal device receives configuration information from a network device, where the configuration information indicates resources of N reference signals for channel measurement, and N is a positive integer greater than 1; the terminal device receives the N reference signals from the network device; the terminal device determines channel state indication information, where the indication information is obtained by the terminal device by measuring the N reference signals based on the configuration information; and the terminal device sends the channel state indication information to the network device.

It can be learned that according to the method provided in embodiments of this application, the terminal device sends, to the network device, the channel state information estimated based on the N reference signals, and does not need to report one piece of channel state information to the network device each time detecting one reference signal. This improves interaction efficiency of a communication system and reduces air interface resource overheads.

In a possible implementation, the configuration information further includes information about periodicities of the resources of the N reference signals for channel measurement, the terminal device periodically receives the N reference signals from the network device, and the terminal device periodically sends the channel state indication information to the network device.

Therefore, the terminal device can periodically feed back a channel state estimated based on the N reference signals.

In a possible implementation, that the terminal device determines channel state indication information includes: The terminal device performs channel prediction based on channel measurement corresponding to the N reference signals, and determines the channel state indication information, where the channel state indication information indicates channel state information after channel prediction.

Therefore, the terminal device can predict the channel information state based on channel measurement corresponding to the N reference signals.

In a possible implementation, that the terminal device determines channel state indication information includes: The terminal device determines the channel state indication information based on channel measurement corresponding to the N reference signals, where the channel state indication information indicates channel state information corresponding to channel measurement.

In a possible implementation, the configuration information further indicates one or N resources for interference measurement, and the channel state indication information is obtained by the terminal device by measuring the N reference signals and performing signal detection on the one or N resources for interference measurement based on the configuration information.

Therefore, the terminal device can measure and feed back the channel state information based on the N reference signals for channel measurement and the one or N interference measurement resources for interference measurement. This improves interaction efficiency of the communication system and reduces the air interface resource overheads.

In a possible implementation, the configuration information further includes information about periodicities of the N resources for interference measurement, and the periodicities of the N resources used for interference measurement are the same as the periodicities of the resources of the N reference signals for channel measurement.

In a possible implementation, the channel state indication information does not include a channel state information reference signal resource indicator CRI.

This helps reduce a calculation amount and signaling overheads.

In a possible implementation, the configuration information further includes codebook type indication information, and the codebook type indication information indicates a codebook type corresponding to the channel state indication information.

In a possible implementation, resources of any two adjacent reference signals of the N reference signals for channel measurement have a same resource offset.

In a possible implementation, any two adjacent resources of the N resources for interference measurement have a same resource offset.

In a possible implementation, the N reference signals for channel measurement have a same quasi co-location QCL type.

In a possible implementation, the reference signal for channel measurement is a non-zero power channel state information reference signal nzp-CSI-RS.

In a possible implementation, the network device sends the configuration information to the terminal device by using radio resource control RRC signaling.

In a possible implementation, the configuration information includes configured time restriction for channel measurement timeRestrictionForChannelMeasurements.

According to a third aspect, a network device is provided, and is configured to perform the method according to any one of the first aspect or the possible implementations of the first aspect. Specifically, the network device may include units configured to perform the method according to any one of the first aspect or the possible implementations of the first aspect.

According to a fourth aspect, a terminal device is provided, and is configured to perform the method according to any one of the second aspect or the possible implementations of the second aspect. Specifically, the terminal device may include units configured to perform the method according to any one of the second aspect or the possible implementations of the second aspect.

According to a fifth aspect, a network device is provided. The network device includes a processor, a transceiver, and a memory. The memory is configured to store computer-executable instructions. When the network device runs, the processor executes the computer-executable instructions stored in the memory, so that the network device performs the method according to any one of the first aspect or the possible implementations of the first aspect.

According to a sixth aspect, a terminal device is provided. The terminal device includes a processor, a transceiver, and a memory. The memory is configured to store computer-executable instructions. When the terminal device runs, the processor executes the computer-executable instructions stored in the memory, so that the terminal device performs the method according to any one of the second aspect or the possible implementations of the second aspect.

According to a seventh aspect, a communication apparatus is provided, and includes a processor. The processor is coupled to a memory, and may be configured to execute instructions in the memory, to implement the method according to any one of the first aspect or the possible implementations of the first aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to an eighth aspect, a communication apparatus is provided, and includes a processor. The processor is coupled to a memory, and may be configured to execute instructions in the memory, to implement the method according to any one of the second aspect or the possible implementations of the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

According to a ninth aspect, a processor is provided and includes an input circuit, an output circuit, and a processing circuit. The processing circuit is configured to: receive a signal through the input circuit, and transmit the signal through the output circuit, so that the processor performs the method according to any one of the first aspect or the possible implementations of the first aspect.

According to a tenth aspect, a processor is provided, and includes an input circuit, an output circuit, and a processing circuit. The processing circuit is configured to receive a signal through the input circuit, and transmit the signal through the output circuit, so that the processor performs the method according to any one of the second aspect or the possible implementations of the second aspect.

According to an eleventh aspect, a processing apparatus is provided, and includes a processor and a memory. The processor is configured to read instructions stored in the memory, and may receive a signal through a receiver and transmit the signal through a transmitter, to perform the method according to any one of the first aspect or the possible implementations of the first aspect.

Optionally, there are one or more processors, and there are one or more memories.

Optionally, the memory may be integrated with the processor, or the memory and the processor are separately disposed.

According to a twelfth aspect, a processing apparatus is provided, and includes a processor and a memory. The processor is configured to read instructions stored in the memory, and may receive a signal through a receiver and transmit the signal through a transmitter, to perform the method according to any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the processor may be a chip, the input circuit may be an input pin, the output circuit may be an output pin, and the processing circuit may be a transistor, a gate circuit, a trigger, various logic circuits, or the like. An input signal received through the input circuit may be received and input through, for example, but not limited to, a receiver, a signal output through the output circuit may be output to, for example, but not limited to, a transmitter and transmitted through the transmitter, and the input circuit and the output circuit may be a same circuit, where the circuit is used as the input circuit and the output circuit at different moments. Specific implementations of the processor and the various circuits are not limited in embodiments of this application.

In a specific implementation process, the memory may be a non-transitory (non-transitory) memory, like a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

It should be understood that, the processing apparatus in the eleventh aspect or the twelfth aspect may be a chip. The processor may be implemented by hardware or software. When being implemented by hardware, the processor may be a logic circuit, an integrated circuit, or the like. When being implemented by software, the processor may be a general-purpose processor, and is implemented by reading software code stored in the memory, where the memory may be integrated in the processor, or may be located outside the processor and exists independently.

According to a thirteenth aspect, a computer-readable storage medium is provided. The computer-readable storage medium stores a program, and the program enables a computer to perform the method according to any one of the first aspect or the possible implementations of the first aspect, or any one of the second aspect or the possible implementations of the second aspect.

According to a fourteenth aspect, a computer program product is provided. The computer program product includes computer program code. When the computer program code is run by a communication unit, a processing unit, a transceiver, or a processor of a communication device, the communication device is enabled to perform the method according to any one of the first aspect or the possible implementations of the first aspect, or any one of the second aspect or the possible implementations of the second aspect.

These aspects or other aspects of the present invention are more concise and more intelligible in descriptions in the following (plurality of) embodiments.

### BRIEF DESCRIPTION OF DRAWINGS

FIG. 1 shows a communication system according to an embodiment of this application;
FIG. 2 is a diagram of structures of a network device and a terminal according to an embodiment of this application;
FIG. 3 is a flowchart of a channel state information feedback method according to an embodiment of this application;
FIG. 4 is a diagram of slots for a network device to send a reference signal according to an embodiment of this application;
FIG. 5 is another diagram of slots for a network device to send a reference signal according to an embodiment of this application;
FIG. 6 is a flowchart of another channel state information feedback method according to an embodiment of this application;
FIG. 7 is a diagram of a structure of a network device according to an embodiment of this application;
FIG. 8 is a diagram of a structure of a terminal device according to an embodiment of this application; and
FIG. 9 is a diagram of a structure of a chip according to an embodiment of this application.

### DESCRIPTION OF EMBODIMENTS

To better understand embodiments of this application, the following several items are described before embodiments of this application.

First, in this application, "being used to indicate" may include "being used to directly indicate" and "being used to indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information.

Furthermore, specific indication manners may alternatively be various conventional indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of radio resource control signaling, medium access control (medium access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

Second, the terms "first", "second", and various numbers in the following embodiments are merely used for differentiation for ease of description, but are not intended to limit the scope of embodiments of this application. For example, different reference signals or indication information is distinguished.

Third, "predefinition" or "preconfiguration" may be implemented by pre-storing corresponding code or a corresponding table in a device (for example, including a terminal device and a network device) or in another manner that can indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, the "protocol" in embodiments of this application, may refer to a standard protocol in the field of communication, for example, including an LTE protocol, an NR protocol, and a related protocol applied to a future communication system. This is not limited in this application.

Fifth, "at least one" refers to one or more, and "a plurality of" refers to two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In addition, for ease of understanding technical solutions of this application, the following briefly describes some terms used in embodiments of this application.

### 1. Channel state information CSI

For example, CSI may include any one or more of a precoding matrix indicator (precoding matrix indicator, PMI), a rank indication (rank indication, RI), a channel quality indicator (channel quality indicator, CQI), a channel state information reference signal resource indicator (CSI-RS resource indicator, CRI), a layer indicator (layer indicator, LI), and the like.

### 2. Reference signal RS, reference signal resource, and reference signal resource set

An RS may be for channel measurement, channel estimation, or the like. A reference signal resource may be used to configure a transmission attribute of a reference signal, for example, any one or more of a time domain resource, a frequency domain resource, a code domain resource, a port mapping relationship, a power factor, and a scrambling code of the reference signal. For details, refer to the conventional technology. A reference signal resource set includes one or more reference signal resources.

The reference signal may include, for example, any one or more of a channel state information reference signal (channel state information reference signal, CSI-RS), a synchronization signal block (synchronization signal block, SSB), a sounding reference signal (sounding reference signal, SRS), and the like. Correspondingly, the reference signal resource may include a CSI-RS resource (CSI-RS resource), an SSB resource, and an SRS resource (SRS resource). For example, the reference signal resource is a CSI-RS resource. The CSI-RS resource may be classified into a non-zero power (non-zero power, NZP) CSI-RS resource and a zero power (zero power, ZP) CSI-RS resource.

### 3. Slot

In next generation radio (next generation radio, NR), a slot is a minimum scheduling unit of time. A slot format includes 14 orthogonal frequency division multiplexing (orthogonal frequency division multiplexing, OFDM) symbols, and a cyclic prefix (cyclic prefix, CP) of each OFDM symbol is a normal CP (normal CP). A slot format includes 12 OFDM symbols, and a CP of each OFDM symbol is an extended CP (extended CP). A slot format includes seven OFDM symbols, and a CP of each OFDM symbol is a normal CP. OFDM symbols in one slot may all be for uplink transmission or may all be for downlink transmission; or some of OFDM symbols in one slot may be for downlink transmission, some of the OFDM symbols may be for uplink transmission, and some of the OFDM symbols may be reserved and not used for transmission. It should be understood that the foregoing examples are merely examples for description, and shall not constitute any limitation on this application. In consideration of system forward compatibility, a slot format is not limited to the foregoing examples.

### 4. Quasi co-location relationship

A quasi co-location (quasi co-location, QCL) relationship means that reference signals corresponding to antenna ports of the reference signals have a same parameter; or a QCL relationship means that a terminal device may determine, based on a parameter of one antenna port, a parameter of another antenna port that has the QCL relationship with the antenna port; or a QCL relationship means that two antenna ports have a same parameter; or a QCL relationship means that a parameter difference between two antenna ports is less than a threshold. The parameter may be at least one of delay spread, Doppler spread, a Doppler shift, an average delay, an average gain, an angle of arrival (angle of arrival, AOA), an average AOA, AOA spread, an angle of departure (angle of departure, AOD), an average angle of departure AOD, AOD spread, a receive antenna spatial correlation parameter, a transmit antenna spatial correlation parameter, a transmit beam, a receive beam, and a resource identifier. The beam includes at least one of the following: a pre-code, a weight sequence number, and a beam sequence number. An azimuth may be a decomposition value in different dimensions, or a combination of decomposition values in different dimensions. The antenna ports are antenna ports having different antenna port numbers, and/or antenna ports that have a same antenna port number and that are used to transmit or receive information at different time resources and/or frequency resources and/or code domain resources, and/or antenna ports that have different antenna port numbers and that are used to transmit or receive information at different time resources and/or frequency resources and/or code domain resources. The resource identifier includes a CSI-RS resource identifier or an SRS resource identifier, and indicates a beam on a resource.

The foregoing briefly describes the technical terms in embodiments of this application. Details are not described below again.

The technical solutions provided in this application may be applied to various communication systems. The technical solutions provided in this application may be applied to a fifth generation (fifth generation, 5G) mobile communication system, a future evolved system, a plurality of communication convergence systems, or the like; or may be applied to another conventional communication system, like a wideband code division multiple access (wideband code division multiple access, WCDMA) system or a long term evolution (Long Term Evolution, LTE) system. Application scenarios of the technical solutions provided in this application may include a plurality of scenarios, for example, machine to machine (machine to machine, M2M), macro-micro communication, enhanced mobile broadband (enhanced mobile broadband, eMBB), ultra-reliable & low latency communication (ultra-reliable & low latency communication, uRLLC), and massive machine type communication (massive machine type communication, mMTC). These scenarios may include but are not limited to a scenario of communication between terminals, a scenario of communication between network devices, a scenario of communication between a network device and a terminal, and the like. Descriptions are provided below by using an example in which the technical solutions of this application are applied to a scenario of communication between a network device and a terminal.

In addition, a network architecture and a service scenario described in embodiments of this application are intended to describe the technical solutions of embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

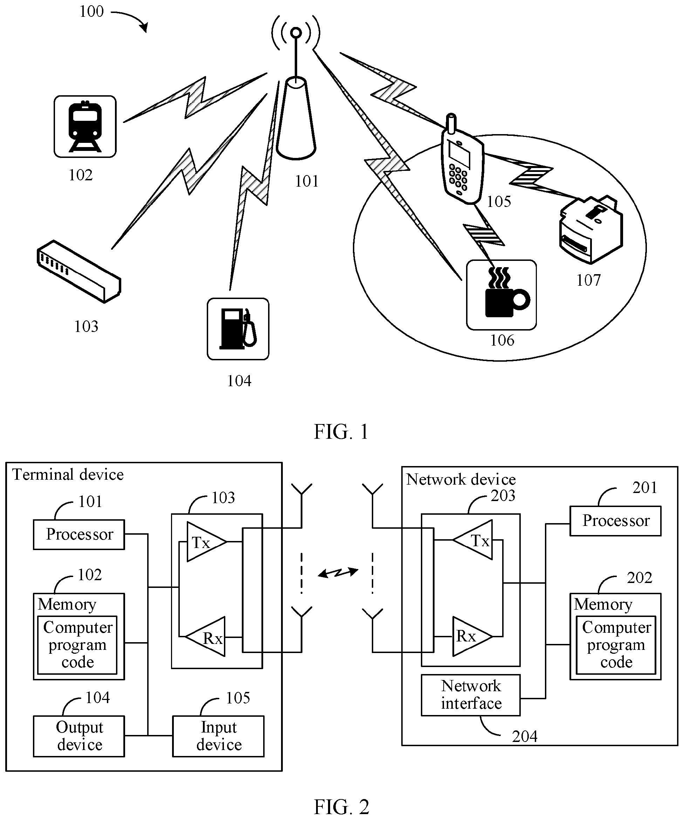

For ease of understanding of embodiments of this application, a communication system to which a channel measurement method according to embodiments of this application is applicable is first described in detail with reference to FIG. 1. FIG. 1 is a diagram of a communication system 100 to which a method according to an embodiment of this application is applicable. As shown in the figure, the communication system 100 may include at least one network device, like a network device 101 shown in FIG. 1. The communication system 100 may further include at least one terminal device, like terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form one communication system.

Optionally, the terminal devices may directly communicate with each other. For example, direct communication between the terminal devices may be implemented by using a D2D technology or the like. As shown in the figure, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

It should be understood that FIG. 1 shows an example of one network device, a plurality of terminal devices, and a communication link between communication devices. Optionally, the communication system 100 may include a plurality of network devices, and coverage of each network device may include another quantity of terminal devices, for example, more or fewer terminal devices. This is not limited in this application.

A plurality of antennas may be configured for the foregoing communication devices, for example, the network device 101 and the terminal devices 102 to 107 in FIG. 1. The plurality of antennas may include at least one transmit antenna configured to send signals and at least one receive antenna configured to receive signals. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the wireless communication system 100 may further include another network entity like a network controller or a mobility management entity. This is not limited in embodiments of this application.

It should be understood that FIG. 1 is merely a diagram, and does not constitute a limitation on an application scenario of the technical solutions provided in this application.

The network device may be a base station, a base station controller, or the like in wireless communication. For example, the base station may include various types of base stations, for example, a micro base station (also referred to as a small station), a macro base station, a relay station, or an access point. This is not specifically limited in embodiments of this application. In embodiments of this application, the base station may be a NodeB (NodeB) in WCDMA, an evolved NodeB (evolved NodeB, eNB or e-NodeB) in LTE, an eNB in the internet of things (internet of things, IoT) or narrowband-internet of things (narrowband-internet of things, NB-IoT), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a base station in a 5G mobile communication network or a future evolved public land mobile network (public land mobile network, PLMN). This is not limited in embodiments of this application.

The network device described in this application, for example, a base station, usually includes a baseband unit (baseband unit, BBU), a remote radio unit (remote radio unit, RRU), an antenna, and a feeder for connecting the RRU and the antenna. The BBU is configured to perform signal modulation. The RRU is configured to perform radio frequency processing. The antenna is configured to perform conversion between a guided wave on a cable and a space wave in air. In one aspect, the distributed base station greatly shortens a length of the feeder between the RRU and the antenna. This can reduce signal loss and reduce costs of the feeder. In another aspect, the RRU and the antenna are small and can be installed anywhere, so that network planning is more flexible. The RRU may be remotely placed. In addition to that, all BBUs may be centralized and placed in a central office (Central Office, CO). In this centralized manner, a quantity of base station equipment rooms can be greatly reduced, energy consumption of auxiliary devices, especially air conditioners, can be reduced, and carbon emission can be greatly reduced. In addition, distributed BBUs can be centrally managed and scheduled after centralized to form a BBU baseband pool, so that resource allocation is more flexible. In this mode, all physical base stations evolve into virtual base stations. All the virtual base stations share information such as data transmission and reception of a user and channel quality in the BBU baseband pool and cooperate with each other to implement joint scheduling.

In some deployments, the base station may include a central unit (central unit, CU) and a distributed unit (distributed unit, DU). The base station may further include an active antenna unit (active antenna unit, AAU). The CU implements some functions of the base station, and the DU implements some functions of the base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher layer signaling, for example, RRC layer signaling or PDCP layer signaling, may also be considered as being sent by the DU or sent by the DU and the AAU. It may be understood that the network device may be a device including one or more of a CU node, a DU node, and an AAU node. In addition, the CU may be assigned as a network device in a RAN, or the CU may be assigned as a network device in a core network (core network, CN). This is not limited herein.

The network device provides a service for a cell, and the terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a highspeed data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a hand-held device or a vehicle-mounted device with a wireless connection function. Currently, some terminal examples may be a mobile phone (mobile phone), a tablet computer (pad), a computer with a wireless transceiver function (like a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in autonomous driving (self-driving), a wireless terminal in telemedicine (telemedicine), a wireless terminal in a smart grid (smart grid), a wireless terminal in transportation safety, a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved PLMN, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an IoT system. IoT is an important part of future information technology development. A main technical feature of IoT is to connect things to a network by using a communication technology, to implement a smart network for man-machine interconnection and thing-thing interconnection. In an IoT technology, massive connections, deep coverage, and power saving of a terminal may be implemented by using, for example, a narrowband (narrowband, NB) technology.

In addition, the terminal device may alternatively include sensors such as an intelligent printer, a train detector, and a gas station, and main functions include collecting data (which is a function of some terminal devices), receiving control information and downlink data of a network device, sending an electromagnetic wave, and transmitting uplink data to the network device.

The terminal is configured to provide a voice and/or data connectivity service for a user. The terminal may have different names, for example, user equipment (user equipment, UE), an access terminal, a terminal unit, a terminal station, a mobile station, a mobile console, a remote station, a remote terminal, a mobile device, a wireless communication device, a terminal agent, or a terminal apparatus. Optionally, the terminal 20 may be a handheld device, a vehicle-mounted device, a wearable device, or a computer that has a communication function. This is not limited in embodiments of this application. For example, the handheld device may be a smartphone. The vehicle-mounted device may be a vehicle-mounted navigation system. The wearable device may be a smart band or a VR device. The computer may be a PDA computer, a tablet computer, and a laptop computer (laptop computer).

FIG. 2 is a diagram of hardware structures of a network device and a terminal device according to an embodiment of this application.

The terminal device includes at least one processor 101 and at least one transceiver 103. Optionally, the terminal device may further include an output device 104, an input device 105, and at least one memory 102.

The processor 101, the memory 102, and the transceiver 103 are connected through a bus. The processor 101 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 101 may further include a plurality of CPUs, and the processor 101 may be a single-core (single-CPU) processor or a multi-core (multi-CPU) processor. The processor herein may refer to one or more devices, circuits, or processing cores configured to process data (for example, computer program instructions).

The memory 102 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a read-only disc (compact disc read-only memory, CD-ROM) or another optical disc storage, an optical disc storage (including a compact disc, a laser disc, an optical disc, a digital versatile disc, a Blu-ray disc, or the like), a disk storage medium, another magnetic storage device, or any other medium that can be used to carry or store expected program code in a form of an instruction or a data structure and that can be accessed by a computer. This is not limited in embodiments of this application. The memory 102 may exist independently, and is connected to the processor 101 through the bus. Alternatively, the memory 102 may be integrated with the processor 101. The memory 102 is configured to store application program code for performing the solutions of this application, and the processor 101 controls the execution. The processor 101 is configured to execute the computer program code stored in the memory 102, to implement the method provided in embodiments of this application.

The transceiver 103 may use any apparatus like a transceiver, and is configured to communicate with another device or a communication network like the Ethernet, a radio access network (radio access network, RAN), a wireless local area network (wireless local area network, WLAN), or the like. The transceiver 103 includes a transmitter Tx and a receiver Rx.

The output device 104 communicates with the processor 101, and may display information in a plurality of manners. For example, the output device 104 may be a liquid crystal display (liquid crystal display, LCD), a light emitting diode (light emitting diode, LED) display device, a cathode ray tube (cathode ray tube, CRT) display device, a projector (projector), or the like. The input device 105 communicates with the processor 101, and may receive an input of a user in a plurality of manners. For example, the input device 105 may be a mouse, a keyboard, a touchscreen device, a sensor device, or the like.

The network device includes at least one processor 201, at least one memory 202, at least one transceiver 203, and at least one network interface 204. The processor 201, the memory 202, the transceiver 203, and the network interface 204 are connected through a bus. The network interface 204 is configured to be connected to a core network device through a link (for example, an S1 interface), or connected to a network interface of another network device through a wired or wireless link (for example, an X2 interface) (not shown in the figure). This is not specifically limited in embodiments of this application. In addition, for related descriptions of the processor 201, the memory 202, and the transceiver 203, refer to the descriptions of the processor 101, the memory 102, and the transceiver 103 in the terminal device. Details are not described herein again.

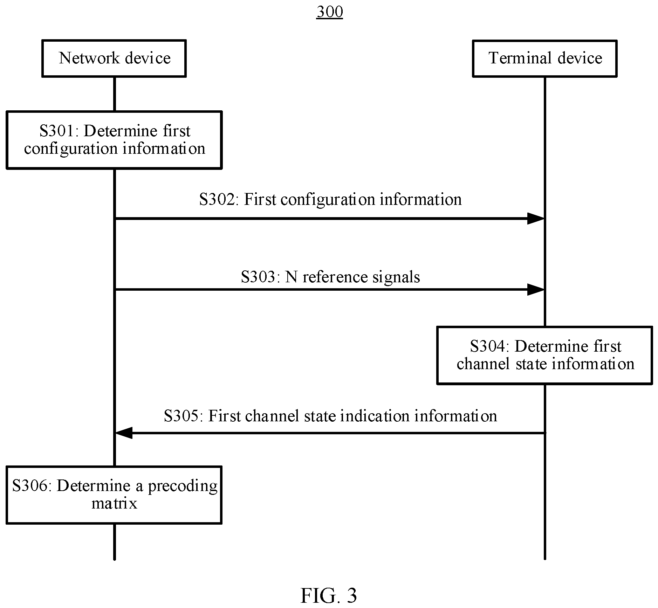

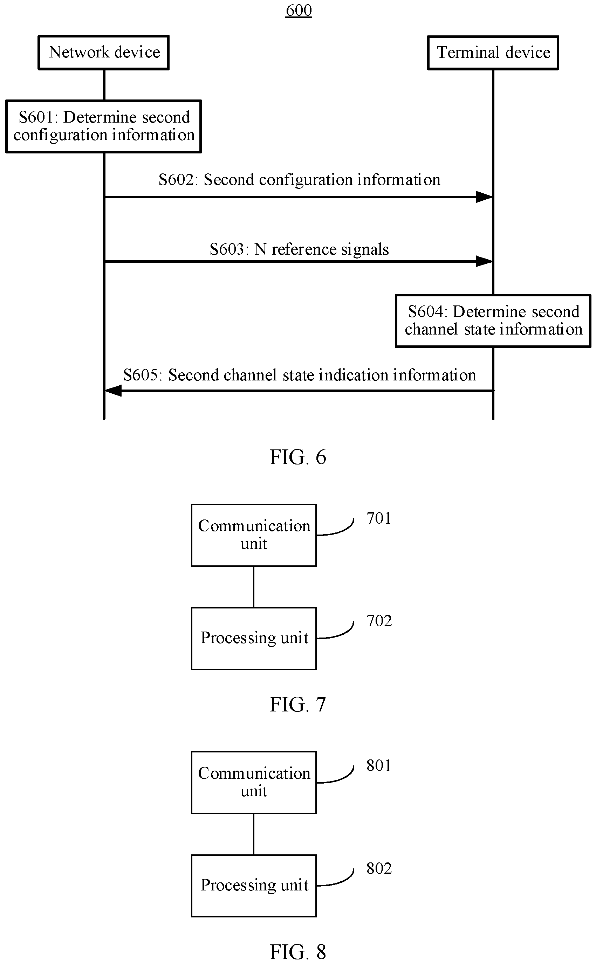

This specification specifically provides the following several embodiments. The following describes in detail the technical solutions of this application with reference to FIG. 3 and FIG. 6 by using specific method embodiments. The following several specific embodiments may be combined with each other, and a same or similar concept or process may not be described repeatedly in some embodiments. It should be noted that FIG. 3 and FIG. 6 are schematic flowcharts of method embodiments of this application, and show detailed communication steps or operations of the methods. However, these steps or operations are merely examples. Other operations or variations of various operations in FIG. 3 and FIG. 6 may be performed in embodiments of this application. In addition, the steps in FIG. 3 and FIG. 6 may be performed in a sequence different from a sequence presented in FIG. 3 and FIG. 6, and not all the operations in FIG. 3 and FIG. 6 may need to be performed.

FIG. 3 is a schematic flowchart of a channel state information feedback method according to an embodiment of this application. The method 300 is applied to interaction between one network device and one terminal device. A procedure shown in FIG. 3 includes the following steps.

S301: The network device determines first configuration information.

In this step, the network device determines the first configuration information of a reference signal used by the terminal device for channel measurement. Specifically, the first configuration information indicates resources of N reference signals, where N is a positive integer greater than 1.

In a possible implementation 1, the first configuration information includes indication information of a time domain resource and/or a frequency domain resource of each of the N reference signals, for example, information indicating a time domain resource and/or a frequency domain resource occupied by each reference signal.

In a possible implementation 2, the first configuration information includes indication information of a time domain resource and/or a frequency domain resource of a first reference signal of the N reference signals, and indication information of a resource offset of a time domain resource and/or a frequency domain resource of each of remaining (N-1) reference signals relative to the time domain resource and/or the frequency domain resource of the first reference signal. It should be understood that the first reference signal may be any one of the N reference signals. This is not specifically limited in this application.

For example, if a resource occupied by a first reference signal is A, a resource offset corresponding to a second reference signal relative to the first reference signal is O₁, a resource offset corresponding to a third reference signal relative to the first reference signal is O₂, ..., and a resource offset corresponding to an N^{th} reference signal relative to the first reference signal is O_{N-1}, the first configuration information may be indication information including N pieces of information, that is, information indicating A, O₁, O₂, ..., and O_{N-1}. In addition, the first configuration information may alternatively be indication information including N+1 pieces of information, that is, information indicating A, 0, O₁, O₂, ..., and O_{N-1}, where 0 represents a resource offset corresponding to the first reference signal relative to the first reference signal. It should be understood that a resource offset represents an offset (offset) of resources occupied by two reference signals in time domain and/or frequency domain. For example, if a first reference signal occupies a first slot (slot) in a frame, and a second reference signal occupies a fifth slot in the frame. In this case, a resource offset corresponding to the second reference signal relative to the first reference signal is four slots. For another example, a first reference signal occupies a fourth resource block (resource block, RB) in a frequency domain bandwidth, and a second reference signal occupies a tenth resource block in the frequency domain bandwidth. In this case, a resource offset corresponding to the second reference signal relative to the first reference signal is six resource blocks.

In a possible implementation 3, the first configuration information includes indication information of a time domain resource and/or a frequency domain resource of a first reference signal of the N reference signals, and indication information of a resource offset of time domain resources and/or frequency domain resources occupied by every two adjacent reference signals of the N reference signals. It should be understood that, the two adjacent reference signals mean that the time domain resources and/or the frequency domain resources occupied by the two reference signals are closest to each other. For example, if a first reference signal occupies a first slot in a frame, a second reference signal occupies a third slot in the frame, and a third reference signal occupies a sixth slot in the frame, the first reference signal and the second reference signal are two adjacent reference signals, the second reference signal and the third reference signal are two adjacent reference signals, and the first reference signal and the third reference signal are not two adjacent reference signals.

For example, if a resource occupied by a first reference signal is A, a resource offset corresponding to the second reference signal relative to the first reference signal is O₁, a resource offset corresponding to the third reference signal relative to the second reference signal is O₂, ..., and a resource offset corresponding to an N^{th} reference signal relative to an (N-1)^{th} reference signal is O_{N-1}, the first configuration information may be information indicating A, O₁, O₂, ..., and O_{N-1}. In addition, the first configuration information may alternatively be information indicating A, 0, O₁, O₂, ..., and O_{N-1}, where 0 represents a resource offset corresponding to the first reference signal relative to the first reference signal.

Optionally, in the resources of the N reference signals, resource offsets of two adjacent reference signals are the same. To be specific, resources of the two adjacent reference signals are spaced at a same interval in time domain and/or frequency domain, for example, the two adjacent reference signals are spaced at a same quantity of slots, or are spaced at a same quantity of resource blocks, or are spaced at a same quantity of slots and a same quantity of resource blocks.

Optionally, the resource offset is a slot offset. The slot offset may also be referred to as a transmission slot offset, a transmit slot offset, or another name. This is not specifically limited in this application. In embodiments of this application, a unit of the slot offset is a slot. The slot offset is an offset relative to a reference slot. The reference slot may be a start slot, an end slot, a specific slot, or the like on a time domain resource occupied by any one of the foregoing reference signals. It should be understood that a specific slot occupied by a reference signal corresponding to the reference slot may be specified in a protocol or may be directly determined by the network device and the terminal device through negotiation in advance. This is not specifically limited in this application. For example, in the foregoing implementation 2, the reference slot may be a start slot or an end slot in the time domain resource occupied by the first reference signal. In the foregoing implementation 3, there are a plurality of reference slots. The reference slot corresponding to the second reference signal may be a start slot or an end slot occupied by the first reference signal, the reference slot corresponding to the third reference signal may be a start slot or an end slot occupied by the second reference signal, ..., and the reference slot corresponding to the (N-1)^{th} reference signal may be a start slot or an end slot occupied by the (N-2)^{th} reference signal.

Further, the first configuration information may further indicate the terminal device to report a channel measurement result based on the N reference signals.

Optionally, in embodiments of this application, the reference signal is a CSI-RS.

S302: The network device sends the first configuration information to the terminal device. Correspondingly, the terminal device receives the first configuration information from the network device.

In a possible implementation, the network device sends the first configuration information to the terminal device by using physical layer signaling, for example, by using DCI signaling.

In another possible implementation, the network device sends the first configuration information to the terminal device by using higher layer signaling. The higher layer signaling is signaling above a physical layer. For example, the higher layer signaling includes RRC signaling, MAC-CE signaling, or the like. Unless otherwise specified, RRC signaling is used as an example in the following embodiments of this specification.

In this step, the network device may send the first configuration information to the terminal device by using signaling in a conventional 3GPP protocol specification (for example, the 3GPP TS 38.331 V16.0.0 protocol specification) or new signaling. If the conventional signaling is used, some fields of the conventional signaling need to be modified; or if the new signaling is used, a new message name and message content may be used. This is not specifically limited in this application.

For example, the first configuration information is CSI report configuration (CSI report configuration) information (which may be abbreviated as a CSI-ReportConfig field) in higher layer signaling, and the CSI report configuration information is used to configure how the terminal device reports the channel measurement result. The CSI report configuration information further includes configuration information of a resource for channel measurement, namely, CSI resource configuration (CSI resource configuration) information (which may be abbreviated as a CSI-ResourceConfig field). In a possible implementation, the CSI resource configuration information includes indication information of a CSI resource set (CSI-ResourceSet). Further, the indication information of the CSI resource set includes indication information of a CSI resource. In another possible implementation, the CSI resource configuration information includes indication information of a CSI resource. The indication information of the CSI resource indicates the resources of the N reference signals. Specifically, the indication information of CSI resource includes indication information of the time domain resource and/or the frequency domain resource of the first reference signal, and CSI resource periodicity and offset (CSI resource periodicity and offset) information (which may be abbreviated as a CSI-ResourcePeriodicityAndOffset field). A CSI resource periodicity indicates a sending periodicity of the N reference signals.

For example, the CSI resource is a non-zero power CSI-RS resource (which may be abbreviated as nzp-CSI-RS-Resource). Optionally, for each of the N nzp-CSI-RSs, the CSI resource configuration information includes an nzp-CSI-RS resource identifier, for example, nzp-CSI-RS-ResourceId.

Optionally, in the CSI report configuration information, time-domain measurement restriction for channel measurement is configured, that is, a timeRestrictionForChannelMeasurements field is set to "configured" (configured). In this case, the terminal device should perform channel measurement based on the resources of the N reference signals, to determine channel state information.

Optionally, QCL sources or QCL types of the N reference signals are the same. For example, in the indication information of the CSI resource, nzp-CSI-RS-Resource may be configured to have same TCI-StateId. One piece of TCI-StateId identifies one piece of TCI-State. TCI-stated may indicate beam information, and represents a QCL relationship between reference signals.

In addition, to be better compatible with a conventional 3GPP protocol specification, one codebook type may be added to a codebook type (codebookType) field in codebook configuration (codebookConfig) information in the CSI report configuration information. The codebook type is different from a codebook type in the conventional 3GPP protocol specification, for example, may be named type II-Doppler, type II-R18, or type II-Doppler-R18, the added codebook type represents channel information feedback implemented by using the technical solutions in embodiments of this application. It should be understood that the name of the codebook type is an example, and a name of the added codebook type is not specifically limited in embodiments of this application.

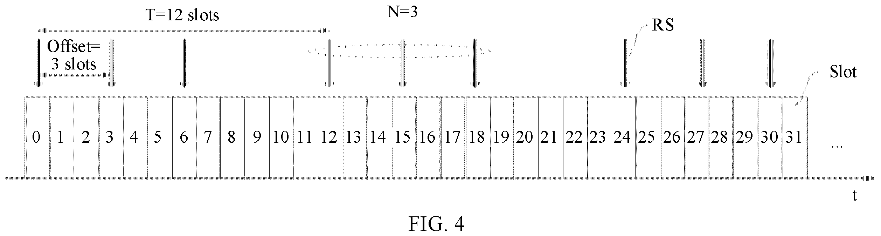

FIG. 4 is a diagram of slots for a network device to send a reference signal. The network device periodically sends three reference signals (N=3), and a sending periodicity of every three reference signals is 12 slots. In a sending periodicity, a resource offset between every two adjacent reference signals in the three reference signals is three slots. In addition, the network device sends a reference signal for the first time in a slot 0. It should be understood that only 32 slots are shown in the figure as an example. In an actual sending process, duration for sending the reference signal by the network device is not limited thereto. Based on the example in FIG. 4, resource indication information of a first reference signal indicates the slot 0. The CSI-ResourcePeriodicityAndOffset field may include information indicating the sending periodicity of 12 slots, information indicating the resource offset of three slots between a second reference signal and the first reference signal, and information indicating a resource offset of six slots between a third reference signal and the first reference signal; or the CSI-ResourcePeriodicityAndOffset field may include information indicating the sending periodicity of 12 slots, information indicating the resource offset of three slots between a second reference signal and the first reference signal, and information indicating a resource offset of three slots between a third reference signal and the second reference signal. The information indicating the sending periodicity may be information indicating "slots12". In addition, because N=3 and the resource offset between two adjacent reference signals is three slots, the CSI-ResourcePeriodicityAndOffset field needs to include only two pieces of information respectively indicating the resource offset of three slots and the resource offset of the six slots; or the CSI-ResourcePeriodicityAndOffset field needs to include only two pieces of information indicating resource offsets of the three slots; or the CSI-ResourcePeriodicityAndOffset field includes indication information of N=3 and one piece of information indicating the resource offset of three slots. It should be understood that a manner used by the CSI-ResourcePeriodicityAndOffset field to indicate the information about the periodicity and the resource offset may be predefined in a protocol, or may be determined by the network device and the terminal device through negotiation. This is not specifically limited in this application.

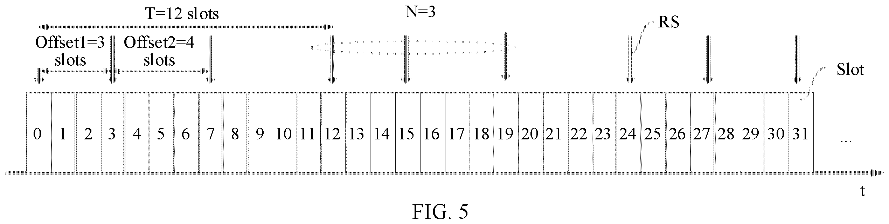

FIG. 5 is another diagram of slots for a network device to send a reference signal. The network device periodically sends three reference signals (N=3), and a sending periodicity of every three reference signals is 12 slots. In a sending periodicity, a resource offset between a second reference signal and a first reference signal is three slots, and a resource offset between a third reference signal and the second reference signal is four slots. In addition, the network device sends a reference signal for the first time in a slot 0. Based on the example in FIG. 5, resource indication information of the first reference signal indicates the slot 0, and the CSI-ResourcePeriodicityAndOffset field may include information indicating the sending periodicity of 12 slots, one piece of information indicating the three slots, and one piece of information indicating the four slots. The information indicating the sending periodicity may be information indicating "slots12", and the CSI-ResourcePeriodicityAndOffset field includes the piece of information indicating the slot offset of three slots and the piece of information indicating the slot offset of four slots.

S303: The network device sends the N reference signals to the terminal device. Correspondingly, the terminal device receives the N reference signals from the network device.

In this step, the network device sends the N reference signals to the terminal device based on the first configuration information determined in step S301. Correspondingly, the terminal device receives the N reference signals from the network device based on the first configuration information received in step S302. For example, the terminal device may determine, based on the time domain resource and/or the frequency domain resource of the first reference signal and information about one or more resource offsets, a time domain resource and/or a frequency domain resource occupied by the N reference signals, and receive the N reference signals on the corresponding time domain resource and/or frequency domain resource.

It should be noted that the N reference signals sent by the network device are N downlink reference signals. In addition, the network device may periodically (periodic) send the N downlink reference signals, or may semi-persistently (semi-persistent) send the N downlink reference signals, or dynamically (dynamic) and aperiodically send the N downlink reference signals. This is not specifically limited in this application. For example, FIG. 4 and FIG. 5 show that the network device periodically sends the N downlink reference signals. In addition, the network device may dynamically and aperiodically send the N downlink reference signals only once, or may semi-persistently and periodically send the N downlink reference signals.

It should be understood that there is no sequence between step S302 and step S303. Before or after the network device sends the N reference signals to the terminal device, the network device may send the first configuration information to the terminal device.

S304: The terminal device determines first channel state information.

In this step, the terminal device determines the first channel state information based on the channel measurement result of the N reference signals.

In a possible implementation 1, the terminal device may estimate channel state information at a plurality of moments by performing channel measurement on the N reference signals, and obtain Doppler frequencies of angle delay pairs of channels in angle delay domain by using the time-varying channels. The terminal device may perform channel prediction based on the obtained Doppler frequencies, that is, predict channel state information that corresponds to one or more subsequent moments based on a Doppler frequency domain obtained through channel measurement on the N reference signals, to obtain the first channel state information. In other words, the first channel state information indicates channel state information that is at one or more moments and that is predicted by the terminal device.

In a possible implementation 2, the terminal device may estimate channel state information at a plurality of moments by performing channel measurement on the N reference signals. When a resource offset between the N reference signals includes a slot offset, the plurality of moments correspond to N moments. The terminal device does not perform channel prediction, and the first channel state information determined by the terminal device is the estimated channel state information at the plurality of moments.

S305: The terminal device sends first channel state indication information to the network device. Correspondingly, the network device receives the first channel state indication information from the terminal device.

The indication information indicates a channel state or channel state information of a channel between the terminal device and the network device.

In a possible implementation, the indication information is a first precoding matrix indicator PMI. For example, in the implementation 1 of step S304, the terminal device predicts the channel state information at the one or more subsequent moments based on the Doppler frequencies obtained through channel measurement on the N reference signals. In this step, the terminal device sends, to the network device, information indicating the predicted channel state information at the one or more moments. For example, the terminal device sends the first PMI to the network device, where the first PMI indicates the channel state information predicted by the terminal device. Optionally, in this step, the terminal device may compress the one or more pieces of predicted channel state information, for example, perform compression in space domain and/or frequency domain and/or time domain. The first PMI indicates the one or more pieces of compressed channel state information.

In another possible implementation, the indication information is a second PMI. For example, in the implementation 2 of step S304, the channel state information determined by the terminal device is N pieces of channel state information that are estimated by the terminal device and that correspond to the N reference signals. In this step, the terminal device sends, to the network device, information indicating estimated channel state information at the plurality of moments. For example, the terminal device sends the second PMI to the network device, where the second PMI indicates the channel state information estimated by the terminal device. Optionally, in this step, the terminal device may compress the plurality of pieces of estimated channel state information, for example, perform compression in space domain and/or frequency domain and/or time domain. The second PMI indicates the N pieces of compressed channel state information. It should be noted that, in the conventional technology, a codebook type (codebookType) in codebook configuration (codebookConfig) information in CSI report configuration information is a type I, and when a network device configures resources of N reference signals, a terminal device needs to report a CRI to perform beam measurement, so that the network device can select an optimal beam by reporting a resource identifier. In comparison with that in the conventional technology, in this embodiment of this application, the terminal device does not report a CRI. This is because, considering that channel state feedback including Doppler information originally has high calculation complexity, not reporting the CRI helps reduce a calculation amount and signaling overheads.

In this way, after detecting a plurality of reference signals, the terminal device sends, to the network device, channel state information estimated based on the plurality of reference signals, and does not need to report one piece of channel state information to the network device each time detecting one reference signal. This improves interaction efficiency of a communication system and reduces air interface resource overheads.

S306: The network device determines a precoding matrix.

Step 306 is optional.

In this step, the network device determines the precoding matrix based on the first channel state indication information received from the terminal device. Further, the network device may precode downlink data based on the precoding matrix, and send precoded data to the terminal device.

Corresponding to the implementation 1 of step S305, in step S306, the network device determines a corresponding first precoding matrix based on the received first PMI. The network device may precode the downlink data of the terminal based on the first precoding matrix, and send the precoded data to the terminal device, so that multi-stream data of the terminal is sent in a space division manner on a same time-frequency resource.

Corresponding to the implementation 2 of step S305, in step S306, the network device performs Doppler frequency estimation and channel prediction based on the second PMI reported by the terminal device. The network device determines a second precoding matrix based on the predicted channel state information, precodes the downlink data of the terminal, and sends the precoded data to the terminal device, so that multi-stream data of the terminal is sent in a space division manner on a same time-frequency resource.

Based on the technical solution shown in FIG. 3, compared with that in the conventional technology in which the terminal device feeds back one piece of channel state information each time measuring one reference signal, in the technical solution in this embodiment of this application, the terminal device feeds back one piece of channel state information only after measuring the N reference signals. This improves the interaction efficiency of the communication system and reduces the air interface resource overheads.

FIG. 6 is a schematic flowchart of another channel state information feedback method according to an embodiment of this application. The method 600 is applied to interaction between one network device and one terminal device. A procedure shown in FIG. 6 includes the following steps.

S601: The network device determines second configuration information.

In this step, the network device determines the configuration information of a resource used by the terminal device to perform channel measurement and interference measurement. Specifically, the second configuration information indicates resources of N reference signals for channel measurement and one or N resources for interference measurement, where N is a positive integer greater than 1.

It should be noted that, in this step, an implementation in which the network device determines the resources of the N reference signals for channel measurement is similar to that described in step S301 in the foregoing embodiment. Details are not described herein again in this specification. For a manner of determining, by the network device, the one or N resources for interference measurement, refer to an implementation in the conventional technology, for example, descriptions in the 3GPP TS 38.331 V16.0.0 protocol specification. Details are not described herein again. If the second configuration information indicates the resources of the N reference signals for channel measurement and the one resource for interference measurement, it may be considered that the resources of the N reference signals correspond to the one resource for interference measurement. In this case, configuring the resource for interference measurement can effectively reduce resource overheads. If the second configuration information indicates the resources of N reference signals for channel measurement and the N resources for interference measurement, it may be considered that a resource of one reference signal of N resources corresponds to one resource for interference measurement. In this case, configuring the N resources for interference measurement can improve interference measurement precision.

Further, the second configuration information may indicate the terminal device to report channel state information based on measurement results of the N reference signals for channel measurement and the one or N resources for interference measurement.

Optionally, in this embodiment of this application, the reference signal for channel measurement is a CSI-RS.

S602: The network device sends the second configuration information to the terminal device. Correspondingly, the terminal device receives the second configuration information from the network device.

In a possible implementation, the network device sends the second configuration information to the terminal device by using physical layer signaling, for example, by using DCI signaling.

In another possible implementation, the network device sends the second configuration information to the terminal device by using higher layer signaling. The higher layer signaling is signaling above a physical layer. For example, the higher layer signaling includes RRC signaling, MAC-CE signaling, or the like. Unless otherwise specified, RRC signaling is used as an example in the following embodiments of this specification.

In this step, the network device may send the configuration information to the terminal device by using signaling in a conventional 3GPP protocol specification (for example, the 3GPP TS 38.331 V16.0.0 protocol specification) or new signaling. If the conventional signaling is used, some fields of the conventional signaling need to be modified; or if the new signaling is used, a new message name and message content may be used. This is not specifically limited in this application.

It should be noted that, in this step, content and signaling of the configuration information of the resources of the N reference signals for measurement in the second configuration information is similar to those described in step S302 in the foregoing embodiment. Details are not described herein again in this specification. For example, configuration information of the resource for interference measurement in the second configuration information may be included in a CSI-ResourceConfig field. Specifically, the CSI-ResourceConfig field may include information of the resource for interference measurement, for example, a CSI-IM-Resource field. The field includes configuration information of the one or N resources for interference measurement, for example, indicates time domain resources and/or frequency domain resources occupied by the one or N resources for interference measurement.

It should be noted that, if the N reference signals for measurement are periodically sent, as shown in FIG. 4 and FIG. 5, the one or N resources for interference measurement are also configured to be periodic. If the configuration information indicates the resources of the N reference signals for channel measurement and the resource for interference measurement, it may be considered that the resources of the N reference signals and the resource for interference measurement have a same periodicity. If the configuration information indicates the resources of the N reference signals for channel measurement and the N resources for interference measurement, it may be considered that the resources of the N reference signals and the N resources for interference measurement have a same periodicity. For example, if a first periodicity of the N reference signals for measurement is 12 slots, the one or N resources for interference measurement also need to be configured as a second periodicity of 12 slots, and both start slots and end slots of the second periodicity and the first periodicity are the same. Optionally, the CSI-IM-Resource field also includes a CSI-ResourcePeriodicityAndOffset field, and the field indicates a periodicity and a resource offset of the one or N resources for interference measurement. It should be understood that the CSI-ResourcePeriodicityAndOffset field included in CSI-IM-Resource and a CSI-ResourcePeriodicityAndOffset field included in NZP-CSI-RS-Resource have a similar data structure. A main difference lies in that the CSI-ResourcePeriodicityAndOffset field included in CSI-IM-Resource is a parameter of the resource for interference measurement, and the CSI-ResourcePeriodicityAndOffset field included in NZP-CSI-RS-Resource is a parameter of the resource for channel measurement.

S603: The network device sends the N reference signals to the terminal device. Correspondingly, the terminal device receives the N reference signals from the network device.

This step is similar to step S303 in the foregoing embodiment. Details are not described herein again in this specification.

S604: The terminal device determines second channel state information.

In this step, the terminal device determines the second channel state information based on a channel measurement result of the N reference signals and signal detection results on the one or N resources for interference measurement.

In a possible implementation, the terminal device calculates channel measurement information by receiving the N reference signals, and calculates interference information by receiving a signal on the resource for interference measurement. The terminal device determines the second channel state information based on the channel measurement information and the interference information.

In another possible implementation, the terminal device calculates channel measurement information by receiving the N reference signals, and calculates interference information by receiving signals on the N resources for interference measurement. The terminal device determines the second channel state information based on the channel measurement information and the interference information.

It should be noted that, similar to step S304 in the foregoing embodiment, in this step, in a possible implementation, the terminal device may predict channel states at one or more subsequent moments based on channel measurement on the N reference signals, and may estimate interference statuses at N moments based on the signal detection results on the one or N resources for interference measurement. The terminal device determines the second channel state information based on the predicted channel states at the one or more moments and the estimated interference statuses at the N moments. In another possible implementation, the terminal device may estimate channel states at N moments based on channel measurement on the N reference signals, and may estimate interference statuses at the N moments based on the signal detection results on the one or N resources for interference measurement. The terminal device determines the second channel state information based on the estimated channel states at the N moments and the estimated interference statuses at the N moments.

Optionally, the second channel state information is a CQI.

S605: The terminal device sends second channel state indication information to the network device. Correspondingly, the network device receives the second channel state indication information from the terminal device.

The indication information indicates a second channel state or the second channel state information.

Based on the technical solution shown in FIG. 6, compared with that in the conventional technology in which a terminal device feeds back one piece of channel state information each time measuring one reference signal and detecting a signal on one resource for interference measurement, in the technical solution in this embodiment of this application, the terminal device feeds back one piece of channel state information only after measuring the N reference signals and detecting the signal on the resource for interference measurement, or measuring the N reference signals and detecting the signals on the N resources for interference measurement. This improves interaction efficiency of a communication system and reduces air interface resource overheads.

The foregoing mainly describes the solutions provided in embodiments of this application from a perspective of interaction between network elements. It may be understood that, to implement the foregoing functions, each of network elements such as the network device and the terminal includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device and the terminal may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which the function modules are obtained through division in correspondence to the functions is used for description below.

FIG. 7 is a diagram of a structure of a network device according to an embodiment of this application. As shown in FIG. 7, the network device includes a communication unit 701 and a processing unit 702. The communication unit 701 is configured to support the network device in performing steps S302, S303, and S305 in FIG. 3, and steps S602, S603, and S605 in FIG. 6, and/or is configured to support another process in the technical solutions described in this specification. It should be noted that the communication unit 701 may further include a receiving unit and a sending unit. The sending unit is configured to support the network device in performing steps S302 and S303 in FIG. 3, steps S602 and S603 in FIG. 6, and/or another process in the technical solutions described in this specification. The receiving unit is configured to support the network device in performing step S305 in FIG. 3, step S605 in FIG. 6, and/or another process in the technical solutions described in this specification. The processing unit 702 is configured to support the network device in performing steps S301 and S306 in FIG. 3, step S601 in FIG. 6, and/or is configured to support another process in the technical solutions described in this specification.

In an example, with reference to the network device shown in FIG. 2, the communication unit 701 in FIG. 7 may be implemented by the transceiver 203 in FIG. 2, and the processing unit 702 in FIG. 7 may be implemented by the processor 201 in FIG. 2. This is not specifically limited in this embodiment of this application.

FIG. 8 is a diagram of a structure of a terminal device according to an embodiment of this application. As shown in FIG. 8, the terminal device includes a communication unit 801 and a processing unit 802. The communication unit 801 is configured to support the terminal device in performing steps S302, S303, and S305 in FIG. 3, steps S602, S603, and S605 in FIG. 6, and/or is configured to support another process in the technical solutions described in this specification. It should be noted that the communication unit 801 may further include a receiving unit and a sending unit. The receiving unit is configured to support the terminal device in performing steps S302 and S303 in FIG. 3, steps S602 and S603 in FIG. 6, and/or another process in the technical solutions described in this specification. The sending unit is configured to support the terminal device in performing step S305 in FIG. 3, step S605 in FIG. 6, and/or another process in the technical solutions described in this specification. The processing unit 802 is configured to support the terminal device in performing step S304 in FIG. 3, step S604 in FIG. 6, and/or is configured to support another process in the technical solutions described in this specification.

In an example, with reference to the terminal device shown in FIG. 2, the communication unit 801 in FIG. 8 may be implemented by the transceiver 103 in FIG. 2, and the processing unit 802 in FIG. 8 may be implemented by the processor 101 in FIG. 2. This is not specifically limited in this embodiment of this application.

An embodiment of this application further provides a computer-readable storage medium. The computer-readable storage medium stores computer instructions. When the computer-readable storage medium runs on a communication apparatus, the communication apparatus is enabled to perform the methods shown in FIG. 3 and FIG. 6. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium, a semiconductor medium (for example, a solid-state drive (solid-state drive, SSD)), or the like.

An embodiment of this application further provides a computer program product including computer instructions. When the computer program product runs on a communication apparatus, the communication apparatus is enabled to perform the methods shown in FIG. 3 and FIG. 6.

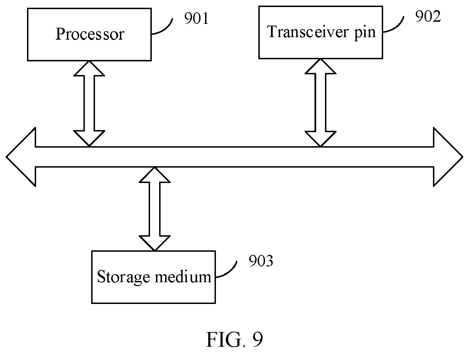

FIG. 9 is a diagram of a structure of a chip according to an embodiment of this application. The chip shown in FIG. 9 may be a general-purpose processor, or may be a dedicated processor. The chip includes a processor 901. The processor 901 is configured to support a communication apparatus in performing the technical solutions shown in FIG. 3 and FIG. 6.

Optionally, the chip further includes a transceiver pin 902. The transceiver pin 902 is configured to receive control from the processor 901, and is configured to support the communication apparatus in performing the technical solutions shown in FIG. 3 and FIG. 6.

Optionally, the chip shown in FIG. 9 may further include a storage medium 903.

It should be noted that the chip shown in FIG. 9 may be implemented by the following circuits or components: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform various functions described throughout this application.

The terminal, the network device, the computer storage medium, the computer program product, and the chip that are provided in embodiments of this application are all configured to perform the method provided above. Therefore, for beneficial effect that can be achieved by them, refer to beneficial effect corresponding to the method provided above. Details are not described herein again.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that the person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A channel state information feedback method, wherein the method comprises:
determining, by a network device, configuration information, wherein the configuration information indicates resources of N reference signals for channel measurement, and N is a positive integer greater than 1;
sending, by the network device, the configuration information and the N reference signals to a terminal device; and
receiving, by the network device, channel state indication information from the terminal device, wherein the indication information is obtained by the terminal device by measuring the N reference signals based on the configuration information.

2. The method according to claim 1, wherein the configuration information further indicates one or N resources for interference measurement, and the channel state indication information is obtained by the terminal device by measuring the N reference signals and performing signal detection on the one or N resources for interference measurement based on the configuration information.

3. The method according to claim 1 or 2, wherein the channel state indication information does not comprise a channel state information reference signal resource indicator CRI.

4. The method according to any one of claims 1 to 3, wherein the configuration information further comprises codebook type indication information, and the codebook type indication information indicates a codebook type corresponding to the channel state indication information.

5. The method according to any one of claims 1 to 4, wherein resources of any two adjacent reference signals of the N reference signals for channel measurement have a same resource offset.

6. The method according to any one of claims 1 to 5, wherein any two adjacent resources of the N resources for interference measurement have a same resource offset.

7. The method according to any one of claims 1 to 5, wherein the N reference signals for channel measurement have a same quasi co-location QCL type.

8. A channel state information feedback method, wherein the method comprises:
receiving, by a terminal device, configuration information from a network device, wherein the configuration information indicates resources of N reference signals for channel measurement, and N is a positive integer greater than 1;
receiving, by the terminal device, the N reference signals from the network device;
determining, by the terminal device, channel state indication information, wherein the indication information is obtained by the terminal device by measuring the N reference signals based on the configuration information; and
sending, by the terminal device, the channel state indication information to the network device.

9. The method according to claim 8, wherein the configuration information further indicates one or N resources for interference measurement, and the channel state indication information is obtained by the terminal device by measuring the N reference signals and performing signal detection on the one or N resources for interference measurement based on the configuration information.

10. The method according to claim 8 or 9, wherein the channel state indication information does not comprise a channel state information reference signal resource indicator CRI.

11. The method according to any one of claims 8 to 10, wherein the configuration information further comprises codebook type indication information, and the codebook type indication information indicates a codebook type corresponding to the channel state indication information.

12. The method according to any one of claims 8 to 11, wherein resources of any two adjacent reference signals of the N reference signals for channel measurement have a same resource offset.

13. The method according to any one of claims 8 to 12, wherein any two adjacent resources of the N resources for interference measurement have a same resource offset.

14. The method according to any one of claims 8 to 12, wherein the N reference signals for channel measurement have a same quasi co-location QCL type.

15. A network device, comprising:
a processing unit, configured to determine configuration information, wherein the configuration information indicates resources of N reference signals for channel measurement, and N is a positive integer greater than 1; and
a communication unit, configured to send the configuration information and the N reference signals to a terminal device, wherein
the communication unit is further configured to receive channel state indication information from the terminal device, wherein the indication information is obtained by the terminal device by measuring the N reference signals based on the configuration information.

16. The network device according to claim 15, wherein the configuration information further indicates one or N resources for interference measurement, and the channel state indication information is obtained by the terminal device by measuring the N reference signals and performing signal detection on the one or N resources for interference measurement based on the configuration information.

17. The network device according to claim 15 or 16, wherein the channel state indication information does not comprise a channel state information reference signal resource indicator CRI.

18. The network device according to any one of claims 15 to 17, wherein the configuration information further comprises codebook type indication information, and the codebook type indication information indicates a codebook type corresponding to the channel state indication information.

19. The network device according to any one of claims 15 to 18, wherein resources of any two adjacent reference signals of the N reference signals for channel measurement have a same resource offset.

20. The network device according to any one of claims 15 to 19, wherein any two adjacent resources of the N resources for interference measurement have a same resource offset.

21. The network device according to any one of claims 15 to 19, wherein the N reference signals for channel measurement have a same quasi co-location QCL type.

22. A terminal device, comprising:
a communication unit, configured to receive configuration information from a network device, wherein the configuration information indicates resources of N reference signals for channel measurement, and N is a positive integer greater than 1, wherein
the communication unit is further configured to receive the N reference signals from the network device; and
a processing unit, configured to determine channel state indication information, wherein the indication information is obtained by the terminal device by measuring the N reference signals based on the configuration information, wherein
the communication unit is further configured to send the channel state indication information to the network device.

23. The terminal device according to claim 22, wherein the configuration information further indicates one or N resources for interference measurement, and the channel state indication information is obtained by the terminal device by measuring the N reference signals and performing signal detection on the one or N resources for interference measurement based on the configuration information.

24. The terminal device according to claim 22 or 23, wherein the channel state indication information does not comprise a channel state information reference signal resource indicator CRI.

25. The terminal device according to any one of claims 22 to 24, wherein the configuration information further comprises codebook type indication information, and the codebook type indication information indicates a codebook type corresponding to the channel state indication information.

26. The terminal device according to any one of claims 22 to 25, wherein resources of any two adjacent reference signals of the N reference signals for channel measurement have a same resource offset.

27. The terminal device according to any one of claims 22 to 26, wherein any two adjacent resources of the N resources for interference measurement have a same resource offset.

28. The terminal device according to any one of claims 22 to 26, wherein the N reference signals for channel measurement have a same quasi co-location QCL type.

29. A computer-readable storage medium, wherein the computer-readable storage medium stores instructions, and when the instructions are run on a computer, the computer is enabled to perform the method according to any one of claims 1 to 14.

30. A chip, comprising a processor, wherein when the processor executes instructions, the processor is configured to perform the method according to any one of claims 1 to 14.

31. A communication device, comprising:
at least one processor; and
a memory and a communication interface that are communicatively connected to the at least one processor, wherein
the memory stores instructions that can be executed by the at least one processor, and the at least one processor executes the instructions stored in the memory, to perform the method according to any one of claims 1 to 14.

32. A computer program product, wherein the program product comprises one or more computer instructions, and when the computer instructions are loaded, a computer is controlled to perform the method according to any one of claims 1 to 14.
